# EUROPÄISCHE PATENTSCHRIFT

(11) **EP 2 397 280 B1**
(45) Veröffentlichungstag und Bekanntmachung des Hinweises auf die Patenterteilung: **02.10.2019**
(21) Anmeldenummer: 11004937.6
(22) Anmeldetag: 16.06.2011
(51) Int. Cl.: B25J 19/06, F16P 3/08, F16P 3/14

(54) **Schutzsystem und -verfahren für einen Manipulator**
Protection system and method for a manipulator
Procédé et système de protection pour un manipulateur

(30) Priorität: 21.06.2010 DE 102010024478
(43) Veröffentlichungstag der Anmeldung: 21.12.2011
(73) Patentinhaber: KUKA Deutschland GmbH, 86165 Augsburg (DE)
(72) Erfinder: Bonin, Uwe, 86316 Friedberg (DE); Schwarz, Richard, 86316 Friedberg (DE)
(74) Vertreter: Schlotter, Alexander Carolus Paul

(56) Entgegenhaltungen:
- EP-A1- 1 514 650
- EP-A2- 1 479 964
- WO-A1-2006/049554
- DE-T5-112007 000 394
- JP-A- 2006 321 014

## Beschreibung

Die vorliegende Erfindung betrifft ein System mit wenigstens einem mobilen Handgerät und ein Verfahren zum Personenschutz mittels eines solchen Systems beim Betrieb wenigstens eines Manipulators, insbesondere Roboters.

Insbesondere in einem kooperierenden Betriebszustand, in dem Bedienpersonal sich im Arbeitsbereich eines Industrieroboters aufhält, soll sichergestellt werden, dass der Roboter, beispielsweise infolge fehlerhafter Eingaben oder einer Funktionsstörung, keine Personen gefährdet.

Dazu ist es, beispielsweise aus der DE 195 36 293 C2DE 103 59 898 A1 und DE 100 23 199 B4, bekannt, drahtgebunden oder drahtlos kommunizierende Handbediengeräte mit einem Notaus- oder einem Zustimmtaster auszustatten. Personen, die ein Handbediengerät nicht aktiv aktivieren, da sie beispielsweise nur im Arbeitsbereich des Roboters agieren, diesen jedoch nicht programmieren, werden so nicht geschützt.

Die DE 10 2007 004 233 A1 schlägt vor, eine Maschine abzuschalten, wenn die Anwesenheit eines von allen Personen zu tragenden Funkchips im Gefahrenbereich der Maschine erfasst wird. Dadurch ist kein kooperierender Betriebszustand, insbesondere kein Einrichtbetrieb möglich, in dem sich Bedienpersonal im Arbeitsbereich eines Industrieroboters aufhält.

Die WO 2006/049554 offenbart ein Industrierobotersystem mit einer automatischen Erfassung eines mobilen Handgeräts. Aufgabe der Erfindung ist es, eine verbesserte Lösung für die Kopplung eines mobilen Handgeräts bereitzustellen. Dies wird dadurch erreicht, dass die Position des mobilen, drahtlosen Handgeräts ermittelt wird und mit einer vordefinierten Fläche, i.e. einer Sicherheitszone, um den Roboter verglichen wird. Sobald ein mobiles Handgerät in die Sicherheitszone eintritt, wird automatisch ein Sicherheitscheck durchgeführt, durch welchen die Sicherheitssysteme des mobilen Handgeräts geprüft werden. Die Sicherheitssysteme umfassen den Zustimmschalter und den Notausschalter.

Die EP 1 514 650 A1 offenbart ein Robotersystem, welches dazu eingerichtet ist, von verschiedenen Handgeräten bedient zu werden. Ziel der Erfindung ist es, einer Mehrzahl von Bedienern einen sicheren Zugang zum Arbeitsraum eines Roboters innerhalb eines Sicherheitszauns zu ermöglichen. Dazu wird ein System vorgeschlagen, welches einen Hauptbediener und verschiedene Nebenbediener kennt. Der Hauptbediener kann den Roboter durch sein Handgerät bedienen. Der Nebenbediener kann den Roboter über sein Handgerät bedienen. Nur wenn die Zustimmtaster aller Handgeräte aktiviert sind, ist eine Aktivierung des Roboters möglich.

Die DE 11 2007 000 394 T5 offenbart ein Robotersystem mit einem drahtlosen Lehreinheit und mit einer Vorrichtung zum Vermeiden eines irrtümlichen Befehls durch den ein Bediener des Roboters gefährdet werden könnte, der sich innerhalb eines Sicherheitszauns um den Roboter befindet. Aufgabe der Erfindung ist es, eine solche Gefahr zu vermeiden. Dies wird dadurch erreicht, dass ein automatischer Programmablauf für den Roboter erst dann erlaubt wird, wenn das Handgerät sich innerhalb einer Zuführeinrichtung befindet. Diese Zuführeinrichtung ist außerhalb des Sicherheitszauns angeordnet.

Aufgabe der vorliegenden Erfindung ist es, die Personensicherheit beim Betrieb von Manipulatoren zu erhöhen.

Diese Aufgabe wird durch ein System mit den Merkmalen des Anspruchs 1 bzw. ein Verfahren mit den Merkmalen des Anspruchs 8 gelöst. Die Unteransprüche betreffen vorteilhafte Weiterbildungen.

Erfindungsgemäß soll die Personensicherheit beim Betrieb eines oder mehrerer Manipulatoren, insbesondere Roboter, und insbesondere die Personensicherheit einer Automatisierungszelle wie etwa einer Fertigungs- und/oder Montagezelle, verbessert werden.

Hierzu wird in einer bevorzugten Ausführung der vorliegenden Erfindung vorgeschlagen, dass eine Freigabe des bzw. der Manipulatoren bewirkt wird, solange alle systemzugehörigen mobilen Handgeräte sich entweder in einer Basisstation befinden oder aber ein Betätigungssignal aussenden, welches die Betätigung eines Zustimmtasters anzeigt. Auf diese Weise kann gleichermaßen festgestellt werden, ob eine Person ein mobiles Handgeräte entnommen hat und korrekt betätigt.

Allgemein sind erfindungsgemäß ein oder mehrere mobile Handgeräte vorgesehen, welche eine Betätigungseinrichtung aufweisen. Hierbei kann es sich insbesondere um eine Zustimmeinrichtung, etwa in Form eines ein- oder vorzugsweise mehrstufigen Tasters und/oder eines Schlüsselschalters, handeln, die einem Betrieb des Manipulators bzw. der Manipulatoren ermöglichen soll, solange die Zustimmeinrichtung in vorgegebener Weise betätigt wird, also beispielsweise ein Zustimmtaster gedrückt wird, ein mehrstufiger Zustimmtaster nicht zu tief gedrückt wird bzw. ein Schlüssel korrekt eingesteckt ist.

Zusätzlich oder alternativ kann eine Betätigungseinrichtung eine Stopeinrichtung aufweisen, die umgekehrt bei Betätigung einem Betrieb des Manipulators bzw. der Manipulatoren verhindern soll, beispielsweise in Form eines Notaus- bzw. Nothalt-Knopfes.

In einer bevorzugten Ausführung weist ein mobiles Handgeräte keine Steuereingabeeinrichtungen zur Eingabe von Steuerbefehlen für einen Manipulator auf und kann so kompakt und kostengünstig sein. Gleichermaßen kann auch ein sogenannter Handheld bzw. PDA, ein tragbares Laptop oder ein Mobiltelefon als ein mobiles Handgerät der vorliegenden Erfindung genutzt werden, wobei hierzu in bevorzugter Ausführung eine Betätigungseinrichtung ein entsprechendes Programmmodul im Arbeitsprogramm bzw. Betriebssystem des Handheld bzw. PDAs, Laptops oder Mobiltelefons aufweisen kann.

Vorzugsweise sind zwei oder mehr, bevorzugt alle mobilen Handgeräte des Systems wenigstens im Wesentlichen identisch ausgebildet.

Mobile Handgeräte können, beispielsweise durch eine Registrierung, eine Signatur oder dergleichen, als zu einem Schutzsystem zugehörig qualifiziert werden, um zu verhindern, dass nicht qualifizierte Handgeräte fälschlicherweise an Stelle nicht betätigter oder nicht in einem vorgegebenen Aufenthaltsbereich anwesender systemzugehöriger Handgeräte erfasst werden. Hierzu können systemzugehörige Handgeräte beispielsweise individuell oder gruppenweise spezifische elektrische Signaturen aussenden oder aufweisen. Während eine Qualifikation in systemzugehörige Handgeräte vorteilhafterweise die Sicherheit erhöht, kann andererseits durch eine Anwesenheitserfassung und einen Betätigungssignalempfang ohne vorherige Registrierung bzw. Abgleich systemzugehöriger Handgeräte das System flexibler sein.

Ein mobiles Handgerät überträgt drahtlos, vorzugsweise elektromagnetisch, etwa über Funk- oder Mikrowellen, sichtbares oder infrarotes Licht, oder beispielsweise akustisch im Ultraschallbereich, entsprechend einer Betätigung seiner Betätigungseinrichtung ein Betätigungssignal, welches eine Freigabe oder deren Abwesenheit anzeigt. So kann beispielsweise ein positives Betätigungssignal, das eine Freigabe durch den Bediener anzeigt, übertragen werden, solange eine Zustimmeinrichtung in vorgegebener Weise betätigt wird und/oder keine Stopeinrichtung betätigt wird. Umgekehrt kann ein negatives Betätigungssignal, das keine Freigabe anzeigt, übertragen werden, solange eine Zustimmeinrichtung nicht in vorgegebener Weise betätigt wird und/oder eine Stopeinrichtung betätigt wird.

Ein Betätigungssignal kann kontinuierlich, periodisch oder ereignisabhängig übertragen werden. Insbesondere kann ein mobiles Handgerät ein Betätigungssignal selbsttätig aussenden oder durch eine Empfangseinrichtung abgefragt werden.

Eine Empfangseinrichtung kann, wie vorstehend ausgeführt, alle Betätigungssignale, die einem vorgegebenen Muster entsprechen, oder alternativ nur Betätigungssignale von systemzugehörigen Handgeräten empfangen.

Erfindungsgemäß ist weiterhin eine Anwesenheitserfassungseinrichtung zum Erfassen einer Anwesenheit eines oder mehrerer mobiler Handgerätes in einem vorgegebenen Aufenthaltbereich vorgesehen.

Dabei wird in einer bevorzugten Ausführung nur die Anwesenheit von systemzugehörigen Handgeräten erfasst. Gleichermaßen ist es auch möglich, nur die Anzahl der in einem vorgegebenen Aufenthaltbereich anwesenden Handgeräte zu erfassen. Diese ist vorzugsweise fest oder variabel vorgegeben.

Eine Anwesenheitserfassungseinrichtung kann insbesondere erfassen, ob sich ein mobiles Handgerät in einer hierfür vorgesehenen Lagerung befindet, und/oder komplementär erfassen, ob es sich in einem vorgegebenen Schutzbereich befindet. Beispielsweise kann über einen oder mehrere, vorzugsweise elektrische oder magnetische, Kontakte erfasst werden, ob sich ein mobiles Handgerät in einer Lagerung befindet. Dies kann auch optisch oder akustisch, insbesondere über Erfassung einer entsprechenden Signatur und/oder Kontur des mobilen Handgeräts, oder über die Gewichtskraft des mobilen Handgerät, erfasst werden. Gleichermaßen kann, beispielsweise durch Lokalisierung der Quelle von einem mobilen Handgerät ausgesandter Signale oder dessen optische oder induktive Erfassung, erfasst werden, ob ein mobiles Handgerät sich in einem Schutzbereich befindet oder in diesen eingeführt wird. Ein vorgegebener Aufenthaltsbereich kann also gleichermaßen einen Bereich definieren, in dem ein Handgerät anwesend sein soll, oder einen Bereich, in dem ein Handgerät nicht anwesend sein darf.

Eine Schutzeinrichtung löst nun erfindungsgemäß eine Reaktion auf Basis einer Aufenthaltserfassung und eines Betätigungssignalempfangs, vorzugsweise für dasselbe oder dieselben mobile(n) Handgerät(e) aus.

Dabei kann eine Aufenthaltserfassung gleichermaßen eine Erfassung der Anwesenheit ("A") eines Handgerätes in einem vorgegebenen Bereich, beispielsweise einer Lagerung, oder eine Nichterfassung der Anwesenheit bzw. Erfassung der Abwesenheit ("¬A") sein, ein Betätigungssignalempfang entsprechend ein Empfang ("Z") oder Nichtempfang ("¬Z") eines Betätigungssignals, so dass die Schutzeinrichtung beispielsweise in Abhängigkeit der logischen Verknüpfungen "A ∧ Z" (Anwesenheit erfasst und Betätigungssignal empfangen), "A ∧ ¬Z", (Anwesenheit erfasst und kein Betätigungssignal empfangen) "¬A ∧ Z", "¬A ∧ ¬Z", "A ∨ Z" (Anwesenheit erfasst oder Betätigungssignal empfangen), "A ∨ ¬Z", "¬A ∨ Z" und/oder "¬A ∨ ¬Z" eine oder unterschiedliche Reaktionen auslösen kann. So kann beispielsweise in der eingangs erläuterten bevorzugten Ausführung der vorliegenden Erfindung eine Freigabe des bzw. der Manipulatoren bewirkt, solange alle systemzugehörigen mobilen Handgeräte sich entweder in einer Basisstation befinden oder aber ein Betätigungssignal aussenden, i.e. ob für alle individuellen systemzugehörigen mobilen Handgeräte i ihre Anwesenheit in der Basisstation erfasst oder ein Betätigungssignal empfangen wird ("Aᵢ ∨ Zᵢ"), oder ob die Anzahl der in der Basisstation erfassten Handgeräte und der empfangenen Betätigungssignale einer vorgegebenen Anzahl mobiler Handgeräte entspricht ("∑(A+Z) = N").

Die ausgelöste Reaktion kann insbesondere ein Stillsetzen eines oder mehrer Manipulatoren, eine Reduzierung der Verfahrgeschwindigkeiten, eine Begrenzung von Antriebskräften, ein Anfahren einer vorgegebenen Pose, einen Nothalt bzw. ein NotAus der Automatisierungszelle oder dergleichen umfassen, wenn von wenigstens einem mobilen Handgerät, das sich in einem vorgegebenen Schutzbereich oder nicht in einer hierfür vorgesehenen Lagerung befindet, ein negatives Betätigungssignal oder kein positives Betätigungssignal empfangen wird.

Gleichermaßen kann die Reaktion beispielsweise eine Fahrfreigabe für einen oder mehrere Manipulatoren umfassen, wenn für alle mobile Handgeräte des Systems entweder erfasst wird, dass sie sich in hierfür vorgesehenen Lagerungen oder jedenfalls nicht in einem vorgegebenen Schutzbereich befinden, oder andernfalls ein positives Betätigungssignal oder kein negatives Betätigungssignal von diesem mobilen Handgerät empfangen wird.

Insbesondere, wenn eine Lagereinrichtung zur Lagerung eines oder mehrerer mobiler Handgeräte in einem vorgegebenen Aufenthaltbereich elektrische Kontakte zum Erfassen eines Aufenthaltes der mobilen Handgeräte in der Lagerung aufweist, können diese in vorteilhafter Weise zur Aufladung von Energiespeichern der gelagerten mobilen Handgeräte genutzt werden. Eine Aufladung bzw. Erfassung kann auch beispielsweise induktiv erfolgen.

In einer bevorzugten Ausführung weist ein erfindungsgemäßes Schutzsystem wenigstes eine, vorzugsweise stationäre, Nothalt- und/oder Quittiereinrichtung auf. Insbesondere, wenn ein geöffneter Zugang zu einem Schutzbereich, etwa eine geöffnete Tür in einem Schutzzaun, einen Stop von einem oder mehreren Manipulatoren bewirkt, soll ein Losfahren infolge eines unbeabsichtigten Schließens des Zugangs, etwa beim Zufallen der Schutztür, verhindert werden. Insbesondere hiezu kann eine Quittiereinrichtung vorgesehen sein, die aktiv, i.e. durch Betätigen, eine Betriebsfreigabe bewirkt. Vorzugsweise ist eine solche stationäre Quittiereinrichtung außerhalb eines vorgegebenen Schutzbereichs angeordnet. Gleichermaßen kann eine Quittiereinrichtung eine Betriebsfreigabe beispielsweise nach dem Lösen einer vorhergehend betätigten Nothalt- bzw. Notaus-Einrichtung bewirken und/oder in einer Betätigungseinrichtung eines oder mehrerer mobiler Handgeräte integriert sein.

Vorzugsweise können die Empfangseinrichtung, die Anwesenheitserfassungseinrichtung, die Schutzeinrichtung, eine Lagereinrichtung, eine Nothalteinrichtung, eine Quittiereinrichtung und/oder Zugangssicherung, beispielsweise ein Schutztürschalter, in einer gemeinsamen Basisstation integriert oder, insbesondere kabelgebunden, mit dieser verbunden sein. Diese kann, beispielsweise über eine diskrete Verkabelung oder ein Bussystem, mit einer Manipulator- oder Anlagensteuerung oder einer Sicherheitssteuerung wie beispielsweise einer Sicherheits-SPS kommunizieren, in der insbesondere auch die Schutzeinrichtung zum Auslösen einer Reaktion wenigstens teilweise implementiert sein kann.

Gemäß einer bevorzugten Ausführung kann durch ein mobiles Handgerät eine Zugangssicherung, etwa eine Schutztürverriegelung oder Lichtschrankenüberwachung, gelöst werden. Dies erhöht die Sicherheit, da nunmehr zum Betreten des Schutzbereichs wenigstens eine Person ein mobiles Handgerät tragen und gegebenenfalls betätigen muss. Hierzu können mobile Handgeräte beispielsweise einen mechanischen oder elektrischen Schlüssel aufweisen oder durch eine entsprechende Einrichtung, etwa optisch, induktiv oder auf Basis von ihnen ausgesandter Signale wie insbesondere Betätigungssignale erkannt werden. Beispielsweise kann eine Schutztür nur entriegeln, wenn in ihrer Nähe ein systemzugehöriges mobiles Handgerät ein Betätigungssignal aussendet, welches eine vorgegebene Betätigung eines Zustimmtasters anzeigt.

Vorteilhafterweise wird das Schutzsystem, vorzugsweise wenigstens teilweise automatisiert, in einem kooperierenden Betriebszustand eines Manipulators, in dem wenigstens eine Bedienperson sich im Arbeitsbereich eines oder mehrerer Manipulatoren befindet, insbesondere in einem sogenannten Einrichtbetrieb zum Kalibrieren und/oder Programmieren des Manipulators, in einen Modus geschaltet, in dem eine Reaktion auf Basis einer Anwesenheitserfassung und eines Betätigungssignalempfangs desselben mobilen Handgerätes bzw. derselben mobilen Handgeräte ausgelöst wird, i.e. ein Verfahren des bzw. der Manipulatoren nur möglich ist, solange für alle individuellen systemzugehörigen mobilen Handgeräten entweder eine Anwesenheit in einem vorgegebenen Aufenthaltsbereich wie einer Basisstation erfasst oder ein Betätigungssignal, insbesondere infolge eines betätigten Zustimmtasters, empfangen wird, oder in dem eine Reaktion auf Basis einer Anwesenheitserfassung und eines Betätigungssignalempfangs einer vorgegebenen Anzahl mobiler Handgeräte ausgelöst wird, i.e. ein Verfahren des bzw. der Manipulatoren nur möglich ist, solange für die vorgegebene Anzahl mobiler Handgeräte entweder eine Anwesenheit in einem vorgegebenen Aufenthaltsbereich erfasst oder ein Betätigungssignal empfangen wird.

In einem automatischen Betriebszustand, in dem kein Aufenthalt von Personen im Arbeitsbereich des Manipulators zugelassen ist, kann das Schutzsystem, wiederum vorzugsweise wenigstens teilweise automatisiert, in einen anderen Betriebsmodus umgeschaltet werden, in dem eine Reaktion nur auf Basis der erfassten Aufenthalte aller mobilen Handgeräte des Systems ausgelöst wird.

In bevorzugter Weise ist ein erfindungsgemäßes System in sicherer, insbesondere redundanter oder diversitärer, Technik ausgebildet. Hierzu kann insbesondere die drahtlose Übertragung von Betätigungssignalen, die Erfassung der Aufenthalte der mobilen Handgeräte und/oder das Auslösen einer Reaktion auf Basis von erfassten Aufenthalten und drahtlos übertragenen Betätigungssignalen, und insbesondere die Anbindung einer Basisstation an eine Manipulator-, Anlagen- bzw. Sicherheitssteuerung, über ein sicheres Protokoll erfolgen.

Weitere Vorteile und Merkmale ergeben sich aus den Unteransprüchen und den Ausführungsbeispielen. Hierzu zeigt, teilweise schematisiert:
- Fig. 1:: eine Automatisierungszelle mit einem Schutzsystem nach einer Ausführung der vorliegenden Erfindung in einem automatischen Betriebszustand
- Fig. 2:: die Automatisierungszelle nach Fig. 1 in einem Einrichtebetrieb; und
- Fig. 3:: den Ablauf eines Verfahrens nach einer Ausführung der vorliegenden Erfindung.

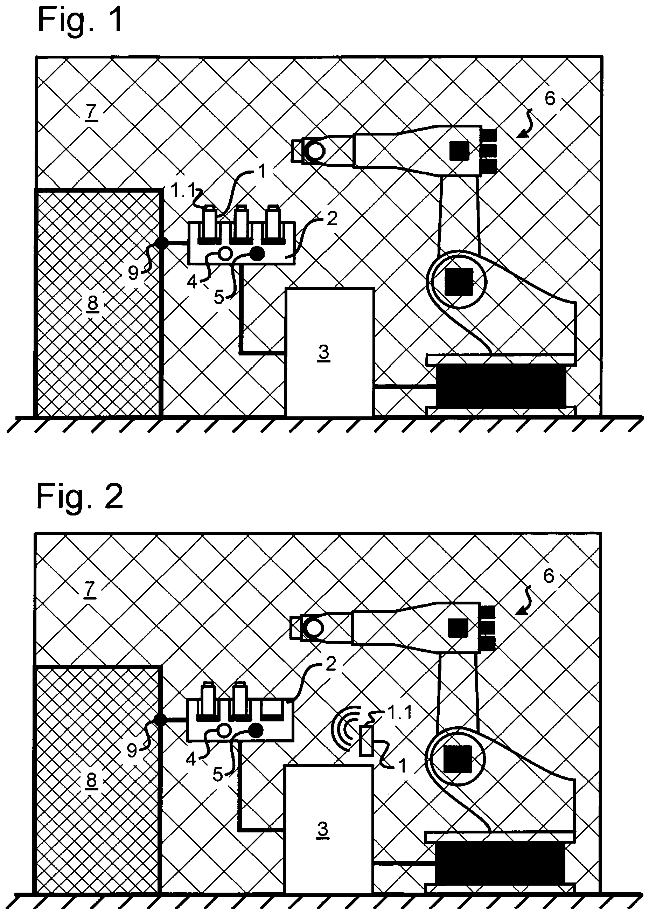

Fig. 1 zeigt eine Automatisierungszelle mit einem Industrieroboter 6 und einem Schutzbereich, der durch einen Schutzzaun 7 abgesperrt ist. In diesem gestattet eine Schutztür 8 Zugang zu dem Schutzbereich, die durch eine Verriegelung gesichert und durch einen Schutztürschalter überwacht wird, die in Fig. 1 gemeinsam mit dem Bezugszeichen 9 dargestellt sind. Der Roboter 6 ist mit einer Robotersteuerung 3 verbunden, die eine Sicherheitssteuerung umfasst. In einer nicht dargestellten alternativen Ausführung kann der Schutzbereich beispielsweise auch, vorzugsweise durch berührungslose Sensoren wie etwa Laser- oder Ultraschallscanner, Lichtschranken und dergleichen definiert und überwacht werden.

Außen neben der Schutztür 8 ist eine Basisstation 2 mit Lagerungen für drei baugleiche mobile Handgeräte 1 angeordnet, die zusätzlich einen Nothalt-Taster 4 und einen Quittier-Taster 5 aufweist und über ein Bussystem oder eine Verkabelung einerseits mit der Robotersteuerung 3 und andererseits mit der Verriegelung und dem Schutztürschalter 9 verbunden ist.

Die Lagerungen weisen elektrische Kontakte zur Kontaktierung der mobilen Handgeräte 1 auf, die einerseits der Aufladung von Energiespeichern der in der Lagerung befindlichen mobilen Handgeräte und andererseits dazu dienen, zu erfassen, ob sich in den durch die Lagerungen definierten vorgegebenen Aufenthaltbereichen jeweils ein mobiles Handgerät befindet. Dabei kann durch entsprechende Kontaktgestaltung und/oder elektrische Signatur ein systemzugehöriges mobiles Handgerät von anderen in den Lagerungen befindlichen Gegenständen unterschieden und so ein Missbrauch bzw. eine unautorisierte Überbrückung des Schutzsystems verhindert werden. Gleichermaßen ist beispielsweise auch eine optische Anwesenheitserfassung, beispielsweise durch periodisches Auslesen von Barcodes der in der Basisstation 2 steckenden Handgeräte 1 möglich, wobei bei Initialisierung des Schutzsystems die Barcodes bzw. Signaturen der systemzugehörigen mobilen Handgeräte erfasst werden.

Die Handgeräte 1 weisen je einen zweistufigen Zustimmtaster 1.1 auf. Wird dieser auf einen vorgegebene Höhenbereich niedergedrückt, der vorzugsweise durch zwei Druckpunkte gekennzeichnet ist, sendet das Handgerät ein positives Betätigungs-Funksignal aus. Solange der Zustimmtaster 1.1 nicht ausreichend tief oder aber in einer Panikreaktion zu tief niedergedrückt wird, wird kein positives Betätigungs-Funksignal übertragen. Das Betätigungssignal wird in einem sicheren Protokoll übertragen, in dem auch das individuelle mobile Handgerät kodiert sein kann.

Dies Basisstation weist neben der Anwesenheitserfassungseinrichtung zum Erfassen der Aufenthalte der mobilen Handgeräte in den Lagerungen in Form der elektrischen Kontakte eine Empfangseinrichtung zum Empfangen dieser positiven Betätigungssignale auf (nicht dargestellt).

Durch entsprechende Programmierung, durch Austausch der Basisstation gegen eine Basisstation mit mehr oder weniger Lagerungen, oder durch Hinzufügen bzw. Entfernen hierzu vorzugsweise modular ausgebildeter Lagerungen kann die Anzahl der mobilen Handgeräte vorgegeben werden, deren Aufenthalt in einer Lagerung erfasst wird.

Dabei können gleichermaßen für individuelle mobile Handgeräte individuelle Lagerungen und/oder Empfangseinrichtungen vorgesehen sein, oder systemzugehörige mobile Handgeräte in beliebige Lagerungen gesteckt bzw. ihr Betätigungssignal mit derselben Empfangseinrichtung empfangen werden. Die Basisstation 2 muss auch nicht stets vollständig bestückt sein. Beispielsweise kann durch entsprechende Programmierung oder Eingabe die Anzahl systemzugehöriger mobiler Handgeräte auch kleiner als die Anzahl der Steckplätze vorgegeben werden.

In einem in Fig. 1 dargestellten automatischen Betriebszustand des Roboters 6 dürfen sich keine Personen innerhalb des Schutzzaunes 7 aufhalten. Die Steuerung 3 verfährt den Roboter 6 daher nur, wenn die Basisstation 2 anzeigt bzw. mitteilt, dass einerseits die Schutztür 8 bewusst geschlossen wurde, was über Schutztürschalter 9 und Quittier-Taster 5 erfasst wird, und sich andererseits in allen drei Lagerungen systemzugehörige mobile Handgeräte befinden, was durch ihre Anwesenheitserfassungseinrichtung erfasst wird.

Wird die Schutztür 8 geöffnet, wird der Roboter 6 sicher stillgesetzt. Wird hingegen ein Handgerät 1 aus seiner Halterung entnommen, wird automatisch in einen anderen Betriebsmodus für den Einrichtbetrieb umgeschaltet, in dem der Roboter 6 nur manuell mit reduzierter Geschwindigkeit verfahren werden kann und autorisierte Personen sich innerhalb des Schutzzaunes 7 aufhalten dürfen.

In diesem Betriebsmodus, der in Fig. 2 dargestellt ist, darf die Schutztür 8 geöffnet werden. Hierzu kann ein Handgerät 1 die Verriegelung 9, beispielsweise als elektronischer Schlüssel, lösen, so dass sichergestellt ist, dass nur eine Person, die ein systemzugehöriges mobiles Handgerät trägt, die Schutztüre 8 öffnen kann.

Alle Personen, die den Schutzzaun 7 betreten, sind durch entsprechende Betriebsanweisung verpflichtet, ein mobiles Handgerät 1 aus der Basisstation 2 zu entnehmen. Sie müssen während ihres gesamten Aufenthaltes im Schutzbereich den Zustimmtaster 1.1 in vorgeschriebener Höhe niederdrücken und anschließend das Handgerät 1 wieder in die Basisstation 2 zurückstecken.

Eine Schutzeinrichtung, die ganz oder jeweils teilweise in der Basisstation 2 und der Roboter- bzw. Sicherheitssteuerung 3 implementiert sein kann, überprüft mittels der Anwesenheitserfassungseinrichtung , ob sich in den drei Lagerungen systemzugehörige mobile Handgeräte befinden. Gleichermaßen werden mittels der Empfangseinrichtung positive Betätigungssignale der entnommenen Handgeräte empfangen.

Auf Basis dieser Erfassungen wird geprüft, ob die Summe der systemzugehörigen mobilen Handgeräte, die als in der Lagerung 2 vorhanden erfasst werden, und der positiven Betätigungssignale zusammen der vorgegebenen Anzahl der systemzugehörigen mobilen Handgeräte, im Ausführungsbeispiel drei, entspricht, i.e. ob für jede Lagerung entweder ein mobiles Handgerät eingesteckt ist oder ein positives Betätigungssignal sendet.

Dies kann gleichermaßen durch eine entsprechende Verarbeitung der empfangenen Betätigungssignale und der erfassten Anwesenheit erfolgen wie auch durch einzelne, vorzugsweise modulare Lagerungen, die jeweils ein individuelles Betätigungssignal empfangen können und eine Freigabe an die Basisstation signalisieren, sofern ein Handgerät vorhanden ist oder ein positives Betätigungssignal empfangen wird.

Sofern die Überprüfung ergibt, dass in jeder Lagerung entweder ein mobiles Handgerät eingesteckt ist oder ein Zustimmtaster in vorgegebener Weise betätigt ist, gibt die Schutzeinrichtung einen Einrichtbetrieb des Roboters 6 frei. Sobald wenigstens ein positives Betätigungssignal entfällt, ohne dass hierfür ein Handgerät in eine Lagerung zurückgesteckt wurde, wird hingegen der Roboter sicher stillgesetzt, vorzugsweise rascher als bei einem Öffnen der Schutztür 8.

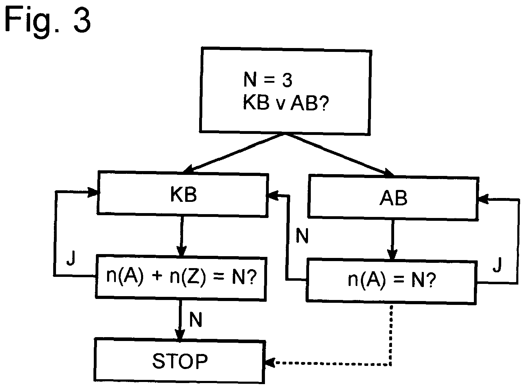

Fig. 3 zeigt schematisch einen entsprechenden Ablauf. Zunächst wird die Anzahl N der systemzugehörigen mobilen Handgeräte mit drei vorgegeben und ein Betriebsmodus AB des Schutzsystems für den Automatikbetrieb gewählt (rechter Zweig in Fig. 3). In diesem wird fortlaufend überprüft, ob die Anzahl n(A) der als in der Basisstation 2 anwesend erfassten mobilen Handgeräte der vorgegebenen Anzahl N der systemzugehörigen mobilen Handgeräte entspricht, i.e. alle Handgeräte eingesteckt sind.

Ist dies der Fall ("J"), wird der Automatikbetrieb von dem Schutzsystem freigegeben, indem beispielsweise die Robotersteuerung 3 ein entsprechendes Freigabesignal erhält.

Unterscheidet sich hingegen die Anzahl der als in der Basisstation 2 anwesend erfassten mobilen Handgeräte von der vorgegebenen Anzahl der systemzugehörigen mobilen Handgeräte ("n(A) = N? → N"), wird beispielsweise in einen manuellen Einrichtbetrieb umgeschaltet (ausgezogen in Fig. 3) oder ein Stop des Roboters 6 durchgeführt (strichliert in Fig. 3). Auf diese Weise kann ein Anwender in einfacher Weise durch Entnahme eines mobilen Handgerätes in einen Einrichtbetrieb umschalten, in dem der Roboter nur manuell verfahrbar ist.

In dem für den Einrichtbetrieb vorgesehenen Betriebsmodus KB überprüft die Schutzeinrichtung fortwährend, ob die Summe der als in der Basisstation 2 anwesend erfassten mobilen Handgeräte (n(A)) und der Handgeräte, von denen positive Betätigungssignale empfangen werden (n(Z)) von der vorgegebenen Anzahl der systemzugehörigen mobilen Handgeräte abweicht ("n(A) + n(Z) = N?"), i.e. alle systemzugehörigen Handgeräte entweder in die Basisstation eingesteckt oder ihr Zustimmtaster betätigt ist. Solange dies der Fall ist ("J"), wird der Einrichtbetrieb freigegeben, andernfalls ("N") sofort ein Stop des Roboters durchgeführt.

Wie an diesem Beispiel klar wird, kann gleichermaßen nur die Gesamtzahl n(A) bzw. n(A)+n(Z) systemzugehöriger mobiler Handgeräte berücksichtigt werden oder alternativ für individualisierte mobile Handgeräte i jeweils ihre Anwesenheit und ihr Betätigungssignal verknüpft werden, etwa in Form i=1 ,...N: Aᵢ ∨ Zᵢ?, i.e. für alle individuellen Handgeräte geprüft werden, ob sie entweder in die Basisstation eingesteckt sind oder ihr Zustimmtaster betätigt ist.

### Bezugszeichenliste

- 1: mobiles Handgerät
- 1.1: zweistufiger Zustimmtaster (Betätigungseinrichtung)
- 2: Basisstation
- 3: Robotersteuerung
- 4: Nothalt-Taster
- 5: Quittier-Taster
- 6: Roboter
- 7: Schutzzaun/-raum
- 8: Schutztür
- 9: Verriegelung, Schutztürschalter

## Patentansprüche

1. Schutzsystem für wenigstens einen Manipulator, insbesondere Roboter (6), mit: wenigstens einem mobilen Handgerät (1), welches eine Betätigungseinrichtung (1.1) aufweist, einer Empfangseinrichtung (2) zum Empfangen eines drahtlos übertragenen Betätigungssignals von wenigstens einem mobilen Handgerät (1); einer Anwesenheitserfassungseinrichtung (2) zum Erfassen einer Anwesenheit wenigstens eines, insbesondere systemzugehörigen, mobilen Handgerätes (1) in einem vorgegebenen Aufenthaltsbereich (2); und eine Schutzeinrichtung (2, 3) zum Auslösen einer Reaktion (STOP) auf Basis einer Anwesenheitserfassung (n(A)) und eines Betätigungssignalempfangs (n(Z)), **dadurch gekennzeichnet, dass** das Schutzsystem in einem kooperierenden Betriebszustand (KB) und in einem automatischen Betriebszustand (AB) eines Manipulators in unterschiedlichen Betriebsmodi (KB, AB) arbeitet und, dass das Schutzsystem eine Umschalteinrichtung zur wenigstens teilautomatisierten Änderung eines Betriebsmodus (KB, AB) des Schutzsystems aufweist und dazu eingerichtet ist dass die in einem vorgegebenen Aufenthaltsbereich zu erfassenden mobilen Handgeräte, insbesondere individuell, in Gruppen oder als Anzahl (N), vorzugsweise fest oder frei, vorgegeben werden (N = 3).

2. Schutzsystem nach Anspruch 1, **dadurch gekennzeichnet, dass** eine Betätigungseinrichtung eine Zustimmeinrichtung (1.1) und/oder eine Stopeinrichtung aufweist.

3. Schutzsystem nach einem der vorhergehenden Ansprüche, **gekennzeichnet durch** eine Lagereinrichtung (2) zur, vorzugsweise erfassten, Lagerung wenigstens eines mobilen Handgeräts (1) in einem vorgegebenen Aufenthaltsbereich.

4. Schutzsystem nach Anspruch 3, **dadurch gekennzeichnet, dass** die Lagereinrichtung zur Aufladung eines Energiespeichers eines in einem vorgegebenen Aufenthaltsbereich gelagerten mobilen Handgeräts eingerichtet ist.

5. Schutzsystem nach einem der vorhergehenden Ansprüche, **gekennzeichnet durch** eine Nothalt- und/oder eine Quittiereinrichtung (4, 5).

6. Schutzsystem nach einem der vorhergehenden Ansprüche, **gekennzeichnet durch** eine durch ein mobiles Handgerät lösbare Zugangssicherung (9).

7. Verfahren zum Personenschutz beim Betrieb wenigstens eines Manipulators, insbesondere Roboters (6), mittels eines Schutzsystems nach einem der vorhergehenden Ansprüche mit dem Schritt:
Auslösen einer Reaktion auf Basis einer Anwesenheitserfassung (n(A)) und eines Betätigungssignalempfangs (n(Z)), **dadurch gekennzeichnet, dass** das Schutzsystem in einem kooperierenden Betriebszustand und in einem automatischen Betriebszustand eines Manipulators in unterschiedlichen Betriebsmodi (KB, AB) arbeitet und dass die in einem vorgegebenen Aufenthaltsbereich zu erfassenden mobilen Handgeräte, insbesondere individuell, in Gruppen oder als Anzahl (N), vorzugsweise fest oder frei, vorgegeben wird (N = 3).

8. Verfahren nach Anspruch 7, **dadurch gekennzeichnet, dass** eine Reaktion ausgelöst wird, wenn für einen vorgegebenen Aufenthaltsbereich zu wenig anwesende Handgeräte erfasst und/oder zu wenig Betätigungssignale empfangen werden (n(A) + n(z) ≠ N; n(A) ≠ N).

## Claims

1. A protection system for at least one manipulator, in particular a robot (6), comprising: at least one mobile handheld device (1), which comprises an actuating device (1.1), a receiving device (2) for receiving a wirelessly transmitted actuation signal from at least one mobile handheld device (1); a presence detection device (2) for detecting the presence of at least one mobile handheld device (1), in particular a system-related mobile handheld device (1), in a specified occupation zone (2); and a protection device (2, 3) for triggering a reaction (STOP) on the basis of a presence detection (n(A)) and the reception of an actuation signal (n(Z)), **characterised in that** the protection system operates in different operating modes (KB, AB) in a cooperating operating state (KB) and in an automatic operating state (AB) of a manipulator, and **in that** the protection system comprises a switching device for changing an operating mode (KB, AB) of the protection system at least partially automatically, and is set up such that the mobile handheld devices which are to be detected in a specified occupation zone are specified, in particular individually, in groups or as a number (N), preferably fixed or free (N = 3).

2. The protection system according to claim 1, **characterised in that** an actuating device comprises an authorisation device (1.1) and / or a stopping device.

3. The protection system according to any one of the preceding claims, **characterised by** a storage device (2) for the storage of at least one mobile handheld device (1) in a specified occupation zone, preferably for the detected storage of at least one mobile handheld device (1) in a specified occupation zone.

4. The protection system according to claim 3, **characterised in that** the storage device is arranged to charge an energy storage device of a mobile handheld device which is stored in a specified occupation zone.

5. The protection system according to any one of the preceding claims, **characterised by** an emergency stop device and / or an acknowledgement device (4, 5).

6. The protection system according to any one of the preceding claims, **characterised by** an access protection device (9) which can be released by a mobile handheld device.

7. A method for the protection of personnel during operation of at least one manipulator, in particular a robot (6), by means of a protection system according to any one of the preceding claims, comprising the step of: triggering a reaction on the basis of a presence detection (n(A)) and an actuation signal reception (n(Z)), **characterised in that** the protection system operates in different operating modes (KB, AB) in a cooperating operating state and in an automatic operating state of a manipulator, and **in that** the mobile handheld devices which are to be detected in a specified occupation zone are specified, in particular individually, in groups or as a number (N), preferably fixed or free (N = 3).

8. The method according to claim 7, **characterised in that** a reaction is triggered if not enough handheld devices are detected as being present and / or not enough actuation signals are received (n(A) + n(z) ≠ N; n(A) ≠ N) for a specified occupation zone.

## Revendications

1. Système de protection pour au moins un manipulateur, en particulier robot (6), avec : au moins un appareil portable mobile (1), lequel présente un dispositif d'actionnement (1.1), un dispositif de réception (2) pour la réception d'un signal d'actionnement transmis sans fil d'au moins un appareil portable mobile (1) ; un dispositif de détection de présence (2) pour la détection d'une présence d'au moins un appareil portable mobile (1), en particulier appartenant au système, dans une zone de séjour (2) prédéfinie ; et un dispositif de protection (2, 3) pour le déclenchement d'une réaction (STOP) sur la base d'une détection de présence (n(A)) et d'une réception de signal d'actionnement (n(Z)), **caractérisé en ce que** le système de protection travaille dans un état de fonctionnement coopérant (KB) et dans un état de fonctionnement automatique (AB) d'un manipulateur dans différents modes de fonctionnement (KB, AB) et, que le système de protection présente un dispositif de commutation pour la modification au moins partiellement automatisée d'un mode de fonctionnement (KB, AB) du système de protection et est aménagé pour que les appareils portables mobiles à détecter dans une zone de séjour prédéfinie sont prédéfinis, en particulier individuellement, en groupes ou en tant que nombre (N), de préférence fixe ou libre (N = 3).

2. Système de protection selon la revendication 1, **caractérisé en ce qu'**un dispositif d'actionnement présente un dispositif d'assentiment (1.1) et/ou un dispositif d'arrêt.

3. Système de protection selon l'une quelconque des revendications précédentes, **caractérisé par** un dispositif de stockage (2) pour, le stockage, de préférence détecté, d'au moins un appareil portable mobile (1) dans une zone de séjour prédéfinie.

4. Système de protection selon la revendication 3, **caractérisé en ce que** le dispositif de stockage est aménagé pour le chargement d'un accumulateur d'énergie d'un appareil portable mobile logé dans une zone de séjour prédéfinie.

5. Système de protection selon l'une quelconque des revendications précédentes, **caractérisé par** un dispositif d'arrêt d'urgence et/ou un dispositif d'acquittement (4, 5).

6. Système de protection selon l'une quelconque des revendications précédentes, **caractérisé par** une protection d'accès (9) libérable par un appareil portable mobile.

7. Procédé de protection de personnes lors du fonctionnement d'au moins un manipulateur, en particulier robot (6), au moyen d'un système de protection selon l'une quelconque des revendications précédentes, avec l'étape de : déclenchement d'une réaction sur la base d'une détection de présence (n(A)) et d'une réception de signal d'actionnement (n(Z)), **caractérisé en ce que** le système de protection travaille dans un état de fonctionnement coopérant et dans un état de fonctionnement automatique d'un manipulateur dans différents modes de fonctionnement (KB, AB) et que les appareils portables mobiles à détecter dans une zone de séjour prédéfinie sont prédéfinis en particulier individuellement, en groupes ou en tant que nombre (N), de préférence fixe ou libre (N = 3).

8. Procédé selon la revendication 7, **caractérisé en ce qu'**une réaction est déclenchée lorsque pour une zone de séjour prédéfinie pas assez d'appareils portables présents sont détectés et/ou pas assez de signaux d'actionnement sont reçus (n(A) + n(z) ≠ N ; n(A) ≠ N).
